# EUROPEAN PATENT APPLICATION

(11) **EP 4 835 696 A1**
(43) Date of publication of application: **04.11.2026**
(21) Application number: 24911344.0
(22) Date of filing: 26.12.2024
(51) Int. Cl.: G06F 18/2433

(54) **ANOMALY DETECTION METHOD AND APPARATUS, AND COMPUTER READABLE STORAGE MEDIUM**

(30) Priority: 28.12.2023 CN 202311835399
(71) Applicant: Tsinghua University, Haidian District Beijing 100084 (CN); Nuctech Company Limited, TongFang Building Shuangqinglu Haidian District Beijing 100084 (CN); Nuctech Jiangsu Company Limited, Changzhou, Jiangsu 213200 (CN)
(72) Inventor: ZHANG, Li, Beijing 100084 (CN); YANG, Liu, Beijing 100084 (CN); SUN, Yunda, Beijing 100084 (CN); LI, Bowen, Beijing 100084 (CN); LI, Yingting, Beijing 100084 (CN); LI, Wei, Beijing 100084 (CN); ZHANG, Jin, Beijing 100084 (CN)
(74) Representative: Gunzelmann, Rainer
(86) International application number: PCT/CN2024/142754
(87) International publication number: WO 2025/140423

(57) **Abstract**

The present disclosure relates to the technical field of anomaly detection, and provides an anomaly detection method and apparatus, and a computer readable storage medium. The method comprises: acquiring first customs declaration data to be detected, wherein said first customs declaration data comprises a plurality of fields associated with corresponding items and addresses, the plurality of items corresponding to the plurality of fields can form a plurality of item sets, and each item set comprises two items among the plurality of items; calculating an evaluation distance between two addresses associated with the two items in each item set; performing association rule mining on a plurality of pieces of historical second customs declaration data to obtain an evaluation index representing an association relationship between the two items in each item set; using an anomaly detection algorithm to process the evaluation distance and the evaluation index so as to obtain a first result representing whether there is a risk between the two items in each item set or not; and on the basis of the first result, determining whether there is an anomaly in the first customs declaration data or not.

## Description

### CROSS-REFERENCE TO RELATED APPLICATIONS

The present disclosure is based on and claims priority to China Patent Application No. 202311835399.0 filed on December 28, 2023, the disclosure of which is incorporated by reference herein in its entirety.

### TECHNICAL FIELD

The present disclosure relates to the technical field of anomaly detection, in particular to an anomaly detection method, an anomaly detection apparatus and a computer-readable storage medium.

### BACKGROUND

At present, there are some abnormal customs clearance trade activities, which can be detected by analyzing customs declaration data.

### SUMMARY

However, the related art lacks a solution that can accurately detect abnormal customs clearance trade activity.

In view of this, the embodiments of the present disclosure provide the following solutions, which can accurately detect abnormal customs clearance trade activity.

According to one aspect of the embodiment of the present disclosure, an anomaly detection method is provided. The method comprises: obtaining first customs declaration data to be detected, wherein the first customs declaration data comprises a plurality of fields in which corresponding items are associated with addresses, a plurality of items corresponding to the plurality of fields forming a plurality of item sets, each item set comprising two items of the plurality of items; calculating an evaluation distance between two addresses associated with the two items in each item set; performing association rule mining on a plurality of second customs declaration data which is historical to obtain an evaluation index representing an association relationship between the two items in each item set; processing the evaluation distance and the evaluation index by using an anomaly detection algorithm to obtain a first result representing whether there is a risk between the two items in each item set; and determining whether there is an anomaly in the first customs declaration data based on the first result.

In some embodiments, the plurality of item sets comprises a first item set, two fields corresponding to the two items in the first item set each being an entity field related to an entity; wherein the determining whether there is an anomaly in the first customs declaration data based on the first result comprises: determining that there is an anomaly related to a trade regional risk in the first customs declaration data in a case where the first result represents that there is a risk between the two items in the first item set.

In some embodiments, the plurality of item sets comprises a second item set, two fields corresponding to the two items in the second item set being one and another of an entity field related to an entity, a port field related to a port and a destination field related to a destination respectively; wherein the determining whether there is an anomaly in the first customs declaration data based on the first result comprises: determining that there is an anomaly related to a regional dispersion risk in the first customs declaration data in a case where the first result represents that there is a risk between the two items in the second item set.

In some embodiments, the calculating an evaluation distance between two addresses associated with the two items in each item set comprises: parsing the two addresses associated with the two items in each item set to obtain two parsed addresses; obtaining geographic coordinates of the two parsed addresses; and calculating a geographic distance between the two parsed addresses based on the geographic coordinates, wherein the evaluation distance comprises the geographic distance.

In some embodiments, the plurality of item sets comprises a third item set, two fields corresponding to the two items in the third item set not comprising a port field related to a port; wherein the calculating an evaluation distance between two addresses associated with the two items in each item set further comprises: calculating a first text distance between two strings corresponding to the two addresses associated with the two items in the third item set; and obtaining a final text distance based on the first text distance, wherein the evaluation distance of the third item set further comprises the final text distance.

In some embodiments, the two parsed addresses each comprise a plurality of levels; the obtaining a final text distance based on the first text distance comprises: taking the first text distance as the final text distance, in a case where strings corresponding to the plurality of levels each contain null; and calculating a second text distance between strings corresponding to each level in at least one level of the plurality of levels, in a case where strings corresponding to the at least one level does not contain null; wherein the final text distance is obtained based on the first text distance and the second text distance.

In some embodiments, the evaluation index comprises at least one of frequency or confidence.

In some embodiments, the anomaly detection algorithm comprises an isolation forest algorithm, a one-class support vector machine algorithm and a statistical anomaly threshold algorithm.

In some embodiments, the plurality of fields comprises an entity field related to an entity; the method further comprises: screening out a first group of second customs declaration data with an item corresponding to the entity field from the plurality of second customs declaration data; determining a commodity code with a frequency of occurrence that is greater than a threshold in the first group of second customs declaration data; screening out a second group of second customs declaration data with the commodity code from the first group of second customs declaration data; and determining a second result representing whether there is a risk in the item corresponding to the entity field, according to whether an item corresponding to a port field related to a port in second customs declaration data within a first time window in the second group of second customs declaration data is comprised in second customs declaration data within a second time window in the second group of second customs declaration data, wherein a start time of the first time window is not earlier than an end time of the second time window; wherein whether there is an anomaly in the first customs declaration data is determined further based on the second result.

In some embodiments, in a case where the second result represents that there is a risk in the item corresponding to the entity field, it is determined that there is an anomaly related to a port shift risk in the first customs declaration data.

According to another aspect of the embodiment of the present disclosure, an anomaly detection apparatus is provided. The anomaly detection apparatus comprises: a module configured to perform the anomaly detection method according to any of the above embodiments.

According to a further aspect of the embodiment of the present disclosure, an anomaly detection apparatus is provided. The anomaly detection apparatus comprises: a memory; and a processor coupled to the memory and configured to perform the anomaly detection method according to any of the above embodiments based on instructions stored in the memory.

According to still another aspect of the embodiment of the present disclosure, a computer-readable storage medium is provided. The computer-readable storage medium comprises computer program instructions that, when executed by a processor, implement the anomaly detection method according to any of the above embodiments.

According to still another aspect of the embodiment of the present disclosure, a computer program product is provided. The computer program product comprises a computer program that, when executed by a processor, implements the anomaly detection method according to any of the above embodiments.

According to still another aspect of the embodiment of the present disclosure, a computer program is provided. The computer program, when executed by a processor, implements the anomaly detection method according to any of the above embodiments.

In the embodiments of the present disclosure, first, the first customs declaration data to be detected is obtained, and a plurality of items associated with addresses in the first customs declaration data may form a plurality of item sets. Then, the evaluation distance between two addresses associated with two items in each item set is calculated, and association rule mining is performed on a plurality of historical second customs declaration data to obtain an evaluation index representing an association relationship between the two items in each item set. In this case, the evaluation distance and the evaluation index may be processed by using an anomaly detection algorithm to obtain a first result representing whether there is a risk between the two items in each item set, so that whether there is an anomaly in the first customs declaration data can be determined according to the first result. In this way, abnormal customs clearance trade activity can be accurately detected.

The technical solutions of the present disclosure will be further described in detail below by way of the accompanying drawings and embodiments.

### BRIEF DESCRIPTION OF THE DRAWINGS

To more explicitly explain the technical solutions in the embodiments of the present disclosure or the relevant art, the accompanying drawings required to be used in the description of the embodiments, or the relevant art will be briefly introduced below. Obviously, the accompanying drawings described below are merely some of the embodiments of the present disclosure. For those of ordinary skill in the art, other accompanying drawings may also be obtained according to these accompanying drawings on the premise that no inventive effort is involved.
Fig. 1 is a flow chart of an anomaly detection method according to some embodiments of the present disclosure;
Fig. 2 is a flow chart of obtaining a final text distance according to some embodiments of the present disclosure;
Fig. 3 is a flow chart of an anomaly detection method according to other embodiments of the present disclosure;
Fig. 4 is a flow chart of an anomaly detection method according to still other embodiments of the present disclosure;
Fig. 5 is a schematic structural view of an anomaly detection apparatus according to some embodiments of the present disclosure;
Fig. 6 is a schematic structural view of an anomaly detection apparatus according to other embodiments of the present disclosure;
Fig. 7 is a schematic structural view of an anomaly detection apparatus according to still other embodiments of the present disclosure.

### DETAILED DESCRIPTION

The technical solutions in the embodiments of the present disclosure will be clearly and completely described below in conjunction with the accompanying drawings in the embodiments of the present disclosure. Apparently, the embodiments described are merely some of the embodiments of the present disclosure, rather than all the embodiments. Based on the embodiments of the present disclosure, all the other embodiments obtained by those of ordinary skill in the art on the premise that no inventive effort is involved shall fall into the protection scope of the present disclosure.

Unless otherwise specified, the relative arrangements, numerical expressions and numerical values of the components and steps expounded in these examples shall not limit the scope of the present invention.

At the same time, it should be understood that, for ease of description, the dimensions of various parts shown in the accompanying drawings are not drawn according to actual proportional relations.

The techniques, methods, and apparatus known to those of ordinary skill in the relevant art might not be discussed in detail. However, the techniques, methods, and apparatus shall be considered as a part of the granted description where appropriate.

Among all the examples shown and discussed here, any specific value shall be construed as being merely exemplary, rather than as being restrictive. Thus, other examples in the exemplary embodiments may have different values.

It is to be noted that: similar reference signs and letters present similar items in the following accompanying drawings, and therefore, once an item is defined in one accompanying drawing, it is necessary to make further discussion on the same item in the subsequent accompanying drawings.

By summary, the main anomalies of customs clearance trade activity at present comprise an anomaly related to a trade regional risk between enterprises, an anomaly related to a regional dispersion risk between an enterprise and a port, and an anomaly related to a port shift risk between an enterprise and a port. These anomalies will be respectively explained below.

The customs clearance trade between enterprises (which may also be referred to as entities or companies) with infrequent trade exchanges and far from each other might be present with the anomaly related to the trade regional risk.

Generally, due to factors such as region, logistics, social relation and industrial chain, it is more reasonable that customs clearance trade activity of an enterprise is declared in a place where the enterprise belongs to, agent by the a customs declaration entity in the place where the enterprise belongs to, and cleared at a port in the place where the enterprise belongs to. With the development of the national customs clearance integration model, a cross-customs-district customs clearance trade activity might also be normal. However, if a declaration is frequently carried out beyond a region of the place where the enterprise belongs to, an agent is frequently carried out by customs declaration entities in different regions, or a customs clearance is frequently carried out in a customs beyond the region of the place where the enterprise belongs to, there might be the anomaly related to the regional dispersion risk.

An enterprise has never imported or exported common commodities at a certain port within a certain time window, but the enterprise has recently begun to import or export common commodities at this port, there might be the anomaly related to the port shift risk.

Through the analysis of several main anomalies above, it has been found that these anomalies are substantially related to historical customs clearance trade activities of the enterprise and related to distances between enterprises, ports, destinations, and the like.

In view of this, the embodiments of the present disclosure provide the following anomaly detection method, which can accurately detect abnormal customs clearance trade activities according to a distance between addresses, and frequent item sets.

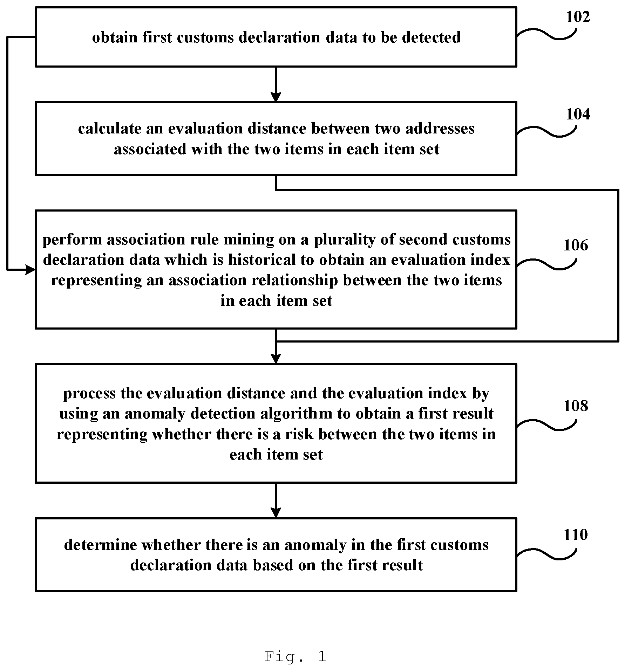

Fig. 1 is a flow chart of an anomaly detection method according to some embodiments of the present disclosure.

As shown in Fig. 1, the anomaly detection method comprises steps 102 to 110.

In step 102, first customs declaration data to be detected is obtained.

Here, the first customs declaration data comprises a plurality of fields in which corresponding items are associated with addresses.

The plurality of fields may comprise, but are not limited to, an entity field related to an entity (comprising, for example, a business entity, a customs declaration entity, a consignee entity and a shipper entity), a port field related to a port (comprising, for example, an import port, an export port and a declaration port) and a destination field related to a destination (comprising, for example, a domestic destination).

An item corresponding to each of these fields is associated with an address, that is, these fields have corresponding addresses. For example, the item corresponding to a business entity may be a identifier of a certain enterprise (for example, an enterprise name, an enterprise customs code, an enterprise credit identifier code, or the like), and the enterprise corresponding to the identifier of the enterprise is associated with a corresponding address.

Here, a plurality of items corresponding to the plurality of fields may form a plurality of item sets, and each item set comprises two items of the plurality of items.

In step 104, an evaluation distance between two addresses associated with two items in each item set is calculated.

For example, the geographical distance between the two addresses associated with two items in each item set may be calculated as the evaluation distance.

In step 106, association rule mining is performed on a plurality of second customs declaration data which is historical to obtain an evaluation index representing an association relationship between two items in each item set.

In some embodiments, the evaluation index may comprise at least one of frequency or confidence. For example, the evaluation index may comprise frequency. For another example, the evaluation index may comprise confidence. For still another example, the evaluation index may comprise frequency and confidence.

In some embodiments, association rule mining may be performed on a plurality of historical second customs declaration data, by using a Frequent Pattern (FP) algorithm, to obtain the evaluation index. The FP algorithm may be a frequent pattern growth (FP-growth) algorithm, for example.

The FP-growth algorithm may scan the plurality of second customs declaration data by constructing a tree structure, to obtain the evaluation index representing the relationship between the two items in each item set. As some implementations, a minimum support may be set to determine whether an item set is a frequent item set according to a frequency of the item set. As other implementations, a minimum confidence may be set to determine whether the relationship between items in an item set is strongly related according to the confidence of the item set.

Taking an item set comprising items corresponding to the consignee entity and the business entity as an example, by performing association rule mining, an example of the evaluation index of the item set may be obtained as follows:

```
   {
   "Consignee entity and business entity": [
      {
       "Relationship": "(enterprise A, enterprise B)",
       "Frequency": 3,
       "Confidence": 1
      }
    ]
   }
```

In the example, (enterprise A, enterprise B) is an item set, enterprise A is an item corresponding to the consignee entity, and enterprise B is an item corresponding to the business entity. The example represents that the frequency of trade between the two items in (enterprise A, enterprise B) is 3, with a confidence of 1.

In step 108, the evaluation distance and the evaluation index are processed by using an anomaly detection algorithm to obtain a first result representing whether there is a risk between the two items in each item set.

In other words, an output (i.e. the first result) representing whether there is a risk in the relationship between the two items in an item set may be obtained, by taking the item set, and the evaluation distance and the evaluation index of the item set as an input of the anomaly detection algorithm.

The following is an example of first results of three item sets of the first customs declaration data:

```
   {
   "Relationship between consignee entity and business entity":
 {"(enterprise A, enterprise B)": 0},
   "Relationship between consignee entity and customs declaration
 entity": {"(enterprise A, enterprise C)": 0},
   "Relationship between business entity and customs declaration
 entity": {"(enterprise B, enterprise C)": 0},
   }
```

In the example, each of (enterprise A, enterprise B), (enterprise A, enterprise C) and (enterprise B, enterprise C) is an item set, and enterprise C is an item corresponding to the customs declaration entity. 0 after an item set represents that there is no risk in the relationship between the two items in the item set, and 1 after an item set represents that there is a risk in the relationship between the two items in the item set. None of the three item sets in the above example has a risk.

In some embodiments, the anomaly detection algorithm may comprise one or more of an isolation forest algorithm, a one-class support vector machine (One Class SVM) algorithm, and a statistical anomaly threshold algorithm. The isolation forest algorithm may isolate abnormal data by constructing a binary tree, to detect the abnormal data. The One Class SVM algorithm may determine normal data by determining a hyperplane, to separate abnormal data. The statistical anomaly threshold algorithm may mine abnormal data according to a quartile and a standard deviation of the data distribution.

As some implementations, the anomaly detection algorithm may comprise the three different algorithms: the isolation forest algorithm, the One Class SVM algorithm and the statistical anomaly threshold algorithm. In this way, the evaluation distance and the evaluation index of an item set may be processed by using the isolation forest algorithm, the One Class SVM algorithm and the statistical anomaly threshold algorithm, respectively, to obtain a sub-result representing whether there is a risk in the relationship between the two items in the item set. Then, the first result may be determined according to the sub-results of the three algorithms. For example, in a case where the sub-result of any one of the three algorithms represents that there is a risk in the relationship between the two items in an item set, the first result represents that there is a risk in the relationship between the two items in the item set. In this way, the accuracy of the first result can be improved, which is beneficial to detecting abnormal customs clearance trade activity more accurately and reducing the false positive rate subsequently.

In step 110, whether there is an anomaly in the first customs declaration data is determined based on the first result.

In some embodiments, it is determined that there is an anomaly in the first customs declaration data (i.e., there is an abnormal customs clearance trade activity), in a case where the first result represents that there is a risk between the two items in item set(s) exceeding a preset number in the plurality of item sets. And it is determined that there is no anomaly in the first customs declaration data (i.e., there is no abnormal customs clearance trade activity), in a case where the first result represents that there is a risk between the two items in item set(s) not exceeding the preset number in the plurality of item sets.

For example, the preset number may be 0. In this case, as long as the first result represents that there is a risk between the two items in any one of the plurality of item sets, it is determined that there is an anomaly in the first customs declaration data.

In the above embodiments, first, the first customs declaration data to be detected is obtained, and a plurality of items associated with addresses in the first customs declaration data may form a plurality of item sets. Then, the evaluation distance between two addresses associated with two items in each item set is calculated, and association rule mining is performed on a plurality of historical second customs declaration data to obtain an evaluation index representing an association relationship between the two items in each item set. In this case, the evaluation distance and the evaluation index may be processed by using an anomaly detection algorithm to obtain a first result representing whether there is a risk between the two items in each item set, so that whether there is an anomaly in the first customs declaration data can be determined according to the first result. In this way, abnormal customs clearance trade activity can be accurately detected.

Next, the anomaly detection method shown in Fig. 1 will be further explained in conjunction with some embodiments.

In some embodiments, the plurality of item sets comprises an item set (hereinafter referred to as a first item set) in which two fields corresponding to the two items are both entity fields.

It may be understood that, the number of the first item set may be one or more. For example, three items corresponding to three entity fields, which are a business entity, a customs declaration entity and a consignee (shipper) entity, may be combined in pairs to obtain three first item sets. The three first item sets are respectively: an item set corresponding to the consignee (shipper) entity and the customs declaration entity, an item set corresponding to the consignee (shipper) entity and the business entity, and an item set corresponding to the business entity and the customs declaration entity.

In these embodiments, it may be determined that there is an anomaly related to the trade regional risk in the first customs declaration data in a case where the first result represents that there is a risk between the two items in the first item set.

For example, in a case where there is a plurality of first item sets, as long as the first result represents that there is a risk between the two items in any item set, it may be determined that there is an anomaly related to the trade regional risk in the first customs declaration data. On the contrary, in a case where the first result represents that there is no risk between the two items in each first item set, it is determined that there is no anomaly related to the trade regional risk in the first customs declaration data.

According to the previous description, it can be known that, the anomaly related to the trade regional risk usually occurs between enterprises with infrequent trade exchanges and far from each other.

In embodiments of the present disclosure, whether there is an anomaly related to the trade regional risk in the first customs declaration data is determined, according to the first result representing whether there is a risk in the first item set in which two fields corresponding to the two items are both entity fields. In this way, abnormal customs clearance trade activity related to the trade regional risk between enterprises can be accurately detected.

In some embodiments, the plurality of item sets comprises an item set (hereinafter referred to as a second item set) in which two fields corresponding to the two items are one and another of an entity field, a port field and a destination field respectively.

It may be understood that, the number of the second item set may be one or more. For example, there may be the following eight second item sets, which are respectively: an item set corresponding to the consignee (shipper) entity and the domestic destination, an item set corresponding to the consignee (shipper) entity and the import (export) port, an item set corresponding to the business entity and the domestic destination, an item set corresponding to the business entity and the import (export) port, an item set corresponding to the customs declaration entity and the domestic destination, an item set corresponding to the customs declaration entity and the import (export) port, an item set corresponding to the customs declaration entity and the declaration port, and an item set corresponding to the import (export) port and the domestic destination.

In these embodiments, it may be determined that there is an anomaly related to the regional dispersion risk in the first customs declaration data, in a case where the first result represents that there is a risk between the two items in the second item set.

For example, in a case where there is a plurality of second item sets, as long as the first result represents that there is a risk between the two items in any one second item set, it may be determined that there is an anomaly related to the regional dispersion risk in the first customs declaration data. On the contrary, in a case where the first result represents that there is no risk between the two items in the second item set, it is determined that there is no anomaly related to the regional dispersion risk in the first customs declaration data.

According to the previous description, it can be known that, the anomaly related to the regional dispersion risk usually exists in these circumstances: a declaration is frequently carried out beyond a region of the place where the enterprise belongs to, an agent is frequently carried out by customs declaration entities in different regions, or a customs clearance is frequently carried out in a customs district beyond the region of the place where the enterprise belongs to.

In embodiments of the present disclosure, whether there is an anomaly related to the regional dispersion risk in the first customs declaration data is determined, according to the first result representing whether there is a risk in the second item set in which two fields corresponding to the two items are one and another of an entity field, a port field and a destination field respectively. In this way, abnormal customs clearance trade activity related to the regional dispersion risk can be accurately detected.

In conjunction with the above embodiments, it can be seen that, by adjusting the fields corresponding to the two items in an item set in the anomaly detection method shown in Fig. 1, abnormal customs clearance trade activity, especially for abnormal customs clearance trade activities related to the trade regional risk and the regional dispersion risk, can be accurately detected.

Next, some embodiments of step 104 will be explained.

In some embodiments, the evaluation distance between two addresses associated with the two items in each item set may be calculated as follows.

First, the two addresses associated with the two items in each item set may be parsed to obtain two parsed addresses.

In some embodiments, the two addresses may be parsed by using a cpca module based on Python language to obtain two intermediate parsed addresses. The format of the intermediate parsed address may be [province, city, district, sub-address], wherein "sub-address" may contain information such as subdistrict/town/township and community. Since the cpca module can complement a fuzzy or missing address, the accuracy of the intermediate parsed address can be high.

As some implementations, the intermediate parsed address may directly serve as the parsed address.

As other implementations, the "sub-address" in the intermediate parsed address may be further parsed by using a regularization algorithm, and the format of the parsed sub-address may be [town, community]. The addresses at each level of the intermediate parsed address and the parsed sub-address may be spliced to obtain the parsed address. The format of the parsed address may be [province, city, county-level city/district/county, subdistrict/town/township, community|residential area |village| hamlet|industrial park|industrial zone|science and technology park|factory|company|office building|mansion]. In this way, the accuracy of the parsed address can be further improved, so that abnormal customs clearance trade activity can be detected more accurately.

Then, geographic coordinates of the two parsed addresses may be obtained. The geographical coordinate may comprise, for example, a longitude and a latitude corresponding to the parsed address.

As some implementations, when the geographical coordinate of the parsed address is obtained, the geographical coordinate of the lowest level in the parsed address is obtained as much as possible. For example, accurate matching of the geographical coordinate of the lowest level is performed first. If the accurate matching fails, fuzzy matching of the geographical coordinate of the lowest level is performed. If the fuzzy matching also fails, the geographical coordinate of an upper level is matched according to a method of accurate matching followed by fuzzy matching. The above process repeats until a certain matching succeeds.

Finally, the geographical distance between the two parsed addresses is calculated based on the geographical coordinates of the two parsed addresses. In this case, the evaluation distance comprises the geographical distance.

Taking the geographic coordinate comprising the longitude and the latitude as an example, the geographic distance d_{i,j} between the two parsed addresses may be calculated based on the following formula: ${d}_{i , j} = 2 ∗ R ∗ {sin}^{- 1} \left(\sqrt{si {n}^{2} \left(\frac{{W}_{i} - {W}_{j}}{2}\right) + cos \left({W}_{i}\right) cos \left({W}_{j}\right) si {n}^{2} \left(\frac{{J}_{i} - {J}_{j}}{2}\right)}\right)$

In the formula, i represents one of the two parsed addresses, j represents another of the two parsed addresses, W represents the latitude, J represents the longitude, and R represents the radius of the earth.

In some embodiments, the plurality of item sets comprises an item set (hereinafter referred to as a third item set) in which two fields corresponding to the two items do not comprise a port field. For example, the third item set may comprise the first item set.

In this case, a first text distance between two strings corresponding to the two addresses associated with the two items in the third item set may also be calculated, and a final text distance may be obtained based on the first text distance. In these embodiments, the evaluation distance of the third item set further comprises the final text distance in addition to the geographical distance.

Since the address of the port is usually in the form of "XX port", the text distance (which may also be referred to as an edit distance) between the port address and the addresses of other items is difficult to accurately reflect the distance between the addresses. Therefore, in the embodiments of the present disclosure, the text distance of the item set comprising an item corresponding to a port field is unnecessary to be calculated, only the text distance of the third item set not comprising the item corresponding to a port field is calculated.

In the above embodiments, for the third item set in which the fields corresponding to the items do not comprise a port field, the text distance is further calculated as one distance of the evaluation distance. While for the item set in which the fields corresponding to the items comprise a port field, the text distance is unnecessary to be calculated as one distance of the evaluation distance. In this way, a more accurate first result can be obtained based on the evaluation distance to detect abnormal customs clearance trade activity more accurately, and the calculation pressure can also be reduced.

Some implementations of obtaining the final text distance based on the first text distance will be explained below.

As some implementations, the two parsed addresses each comprise a plurality of levels.

In a case where strings corresponding to the plurality of levels each contain null (that is, None), the first text distance is taken as the final text distance.

In a case where strings corresponding to at least one level of the plurality of levels does not contain null, a second text distance between strings corresponding to each level in the at least one level is calculated, and the final text distance is obtained based on the first text distance and the second text distance.

Taking the parsed address being the intermediate parsed address in the previous embodiments as an example, each parsed address comprises four levels, which are respectively: province, city, district and sub-address. In this case, the two parsed addresses are [province 1, city 1, district 1, sub-address 1] and [province 2, city 2, district 2, sub-address 2], respectively.

If strings corresponding to the plurality of levels each contain null, that is, any one of "province 1" and "province 2" is null, any one of "city 1" and "city 2" is null, any one of "district 1" and "district 2" is null, and any one of "sub-address 1" and "sub-address 2" is null, the first text distance is taken as the final text distance.

If strings corresponding to at least one level do not contain null, for example, neither "province 1" nor "province 2" is null, neither "city 1" nor "city 2" is null, neither "district 1" nor "district 2" is null, or neither "sub-address 1" nor "sub-address 2" is null, the second text distance between strings corresponding to each level in the at least one level is calculated, and the final text distance is obtained based on the first text distance and the second text distance.

As some implementations, each level of the plurality of levels has a corresponding weight. Weighted summation may be performed on the second text distance of the level with corresponding strings not containing null, and the weighted average of the weighted summation result and the first text distance may be calculated as the final text distance.

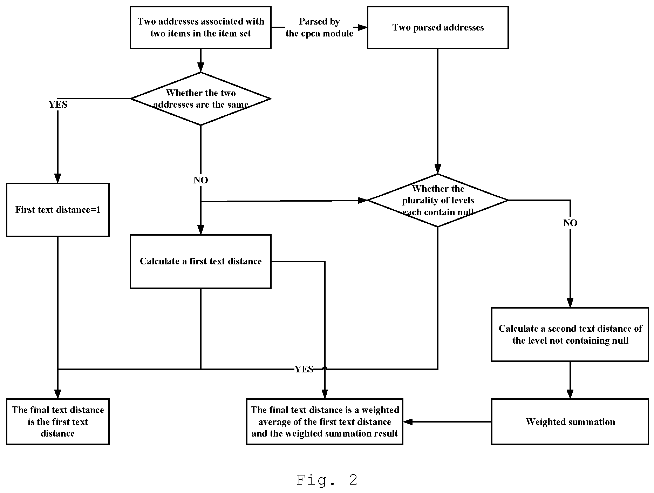

To facilitate understanding, the following description will be made in conjunction with Fig. 2. Fig. 2 is a flow chart of obtaining a final text distance according to some embodiments of the present disclosure.

As shown in Fig. 2, for the two addresses associated with the two items in an item set, whether the two addresses are the same may be first determined, and the two addresses may be parsed by using a cpca module to obtain two parsed addresses.

If the two addresses which are unparsed are the same, it is directly determined that the first text distance is equal to 1 without additional calculation. In this case, the final text distance is equal to the first text distance.

It may be understood that, the closer the text distance is to 1, the higher the similarity between two strings is.

If the two addresses which are unparsed are different, the first text distance between strings corresponding to the two addresses is calculated, and whether strings corresponding to the plurality of levels of the two parsed addresses each contain null is judged.

If strings corresponding to the plurality of levels each contain null, the calculated first text distance is directly taken as the final text distance.

If strings corresponding to the plurality of levels each do not contain null, the second text distance between strings corresponding to the level(s) not containing null is calculated. Then, weighted summation is performed on the second text distances between strings corresponding to the level(s) not containing null. In this case, the final text distance is a weighted average of the calculated first text distance and the weighted summation result.

As some implementations, when weighted summation is performed on the second text distances, lower level among the plurality of levels has a greater weight. Taking the format of the parsed address being [province, city, district, sub-address] as an example, the weight of the level "province" may be 0.1, the weight of the level "city" may be 0.2, the weight of the level "district" may be 0.3, and the weight of the level "sub-address" may be 0.4. In this way, the final text distance can be calculated more accurately, so that abnormal customs clearance trade activity can be detected more accurately.

As some implementations, in a case where only one level of levels other than the lowest level among the plurality of levels contains null, and the levels other than the one level which contains null among the plurality of levels each is the same, the second text distance of each level can be directly determined as 1 without respective calculation. For example, in a case where the text of the level "province" is the same, the text of the level "district" is the same, the text of the level "sub-address" is the same, and only the level "city" contains null, the two parsed addresses may be considered the same. At this time, the second text distance of each level may be directly determined as 1.

As some implementations, the text distance (for example, the first text distance and the second text distance) may be calculated based on the Jaro-Winkler algorithm. In the Jaro-Winkler algorithm, the text distance D=d+L*p(1-d), where d represents the calculated score of the Jaro distance of two strings, L is the length with the same prefix (the maximum value is 4), and p represents the constant for adjusting the score (the maximum value is 25, for example, it may be 0.1).

The text distance D=0 represents that two strings are completely different, the text distance D=l represents that two strings are completely the same, and the closer the text distance D is to 1, it is represented that the higher the similarity between two strings is.

The calculated score d of the Jaro distance may be calculated by the following formula: $d = \left\{\begin{matrix}0 & , m = 0 \\ \frac{1}{3} \left(\frac{m}{\left|{l}_{1}\right|}+\frac{m}{\left|{l}_{2}\right|}+\frac{m - t}{m}\right) & , m \neq 0\end{matrix}\right.$

In the formula, m is the number of matched characters, t is the number of character conversions, and |l₁| and |l₂| represent the lengths of two strings to be compared.

So far, some embodiments of the anomaly detection method shown in Fig. 1 have been described. Next, the anomaly detection method according to other embodiments of the present disclosure will be described.

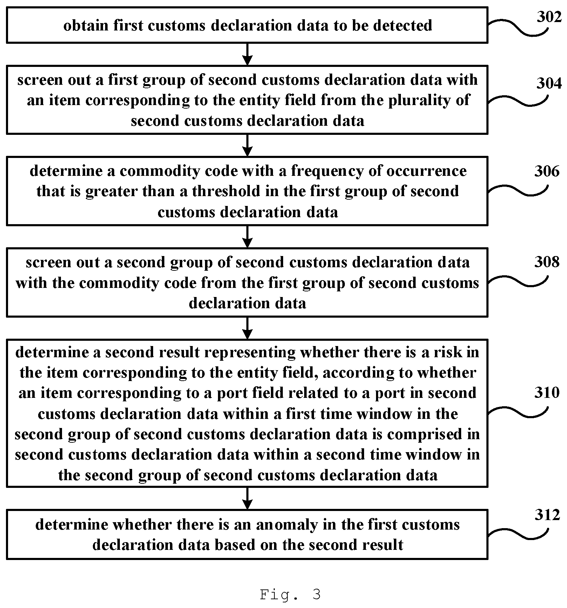

Fig. 3 is a flow chart of an anomaly detection method according to other embodiments of the present disclosure.

As shown in Fig. 3, the anomaly detection method comprises steps 302 to 312. The steps among step 302 to step 312 that are similar to the previous text will no longer be explained repeatedly here, and reference may be made to the previous text for related embodiments.

In step 302, the first customs declaration data to be detected is obtained.

In step 304, a first group of second customs declaration data with an item corresponding to the entity field is screened out from the plurality of second customs declaration data which is historical.

In step 306, a commodity code with a frequency of occurrence that is greater than a threshold in the first group of second customs declaration data is determined.

The commodity code may represent a common commodity of the item corresponding to the entity field. For example, the commodity code with the top frequency of occurrence (for example, the top 20) in the first group of second customs declaration data may be determined as a common commodity. The commodity code may be, for example, a commodity tax number.

In step 308, a second group of second customs declaration data with the commodity code is screened out from the first group of second customs declaration data.

In step 310, a second result representing whether there is a risk in the item corresponding to the entity field is determined, according to whether an item corresponding to a port field related to a port in second customs declaration data within a first time window in the second group of second customs declaration data is comprised in second customs declaration data within a second time window in the second group of second customs declaration data.

Here, a start time of the first time window is not earlier than an end time of the second time window. That is, the first time window is later than the second time window. For example, the first time window is within the recent 30 days, and the second time window is from the recent 2 years ago to the recent 30 days ago.

In some embodiments, if an item (i.e. an identifier of a port) corresponding to a port field related to a port in the second customs declaration data within the first time window in the second group of second customs declaration data is comprised in second customs declaration data within the second time window in the second group of second customs declaration data, it is represented that the recent customs clearance port of the common commodity of the enterprise is the former customs clearance port. In this case, the second result represents that the item corresponding to the entity field (i.e. the certain enterprise) is not present with a risk.

On the contrary, if an item corresponding to a port field related to a port in the second customs declaration data within the first time window in the second group of second customs declaration data is not comprised in second customs declaration data with the second time window in the second group of second customs declaration data, it is represented that the recent customs clearance port of the common commodity of the enterprise is not the former customs clearance port. In this case, the second result represents that the item corresponding to the entity field is present with a risk.

An example of the second result is as follows:

```
   {
   "Import shift risk enterprises": {
   "Consignee entity": ["enterprise A"],
      "Business entity": ["enterprise B"],
      "Customs declaration entity": ["enterprise C"]},
   "Export shift risk enterprises": {
   "Consignee entity": ["enterprise A"],
      "Business entity": ["enterprise B"],
      "Customs declaration entity": ["enterprise C"]},
   }
```

This example represents that in the first customs declaration data, the item corresponding to the consignee entity (i.e., enterprise A), the item corresponding to the business entity (i.e., enterprise B) and the item corresponding to the customs declaration entity (i.e., enterprise C) each are import shift risk enterprises and export shift risk enterprises, that is, the items corresponding to the entity field in the first customs declaration data each are present with a risk.

In step 312, whether there is an anomaly in the first customs declaration data is determined according to the second result.

In some embodiments, in a case where the second result represents that there is a risk in the item corresponding to the entity field, it is determined that there is an anomaly related to a port shift risk in the first customs declaration data. On the contrary, in a case where the second result represents that there is no risk in the item corresponding to the entity field, it is determined that there is no anomaly related to a port shift risk in the first customs declaration data.

According to the previous description, it can be known that, an enterprise has never imported or exported a common good at a certain port within a certain time window, but the enterprise has recently begun to import or export common commodities at this port, there might be the anomaly related to the port shift risk.

In the embodiments of the present disclosure, common commodities of the enterprise can be found by screening out the first group of second customs declaration data comprising a certain enterprise identifier in the current first customs declaration data from the historical second customs declaration data , and determining the commodity code with a frequency of occurrence that is greater than a threshold in the first group of second customs declaration data. Then, it is determined that the second group of second customs declaration data comprising the commodity code of the common commodity is found from the first group of second customs declaration data, and thus whether the port in the second group of second customs declaration data within the first time window is comprised in the second group of second customs declaration data within the second time window can be judged, and the second result can be obtained, so that whether there is an anomaly in the first customs declaration data can be determined according to the second result. In this way, abnormal customs clearance trade activity, especially for abnormal customs clearance trade activity related to the port shift risk, can be accurately detected.

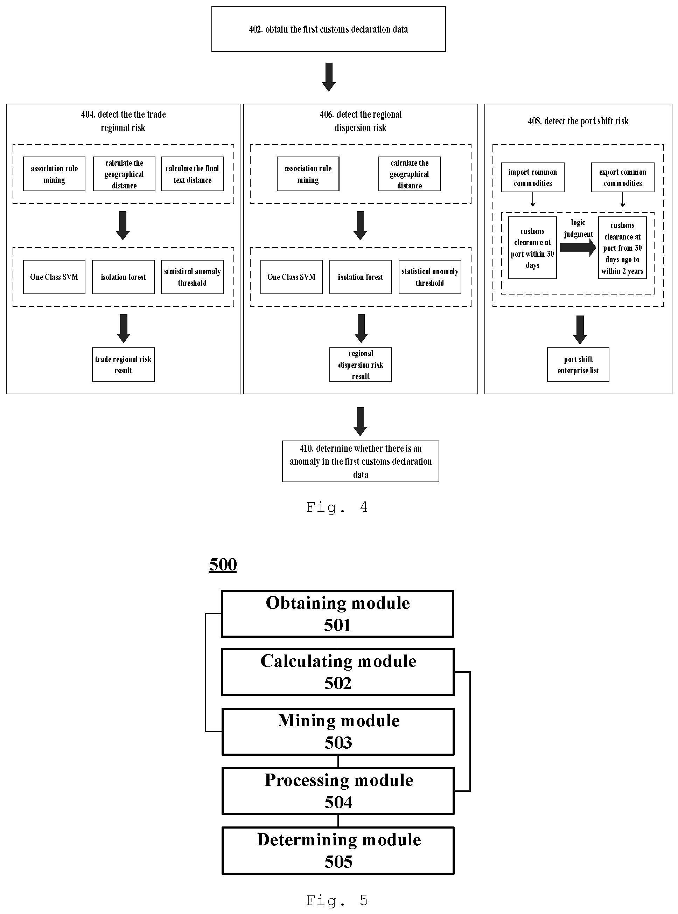

Figs. 1 and 3 above show two different anomaly detection methods of customs clearance trade activity, but the embodiments of Figs. 1 and 3 may also be combined with each other. Description will be made below in conjunction with Fig. 4.

Fig. 4 is a flow chart of an anomaly detection method according to still other embodiments of the present disclosure.

As shown in Fig. 4, the anomaly detection method comprises steps 402 to 410.

In step 402, the first customs declaration data is obtained.

In step 404, the trade regional risk is detected to obtain a first part of the first result (which may also be referred to as a trade regional risk result).

Specifically, the geographic distance and the final text distance (i.e. the evaluation distance) between two addresses associated with two items in the first item set may be calculated, and association rule mining may be performed to obtain the evaluation index of the first item set. Then, processing may be performed by using the isolation forest algorithm, the One Class SVM algorithm and the statistical anomaly threshold algorithm to obtain the trade regional risk result. For the relevant embodiments, reference may be made to the previous description, which will not be described in detail here.

In step 406, the regional dispersion risk is detected to obtain a second part of the first result (which may also be referred to as a regional dispersion risk result).

Specifically, the geographic distance (i.e. the evaluation distance) between the two addresses associated with the two items in the second item set may be calculated, and association rule mining may be performed to obtain the evaluation index of the second item set. Then, processing may be performed by using the isolation forest algorithm, the One Class SVM algorithm and the statistical anomaly threshold algorithm to obtain the regional dispersion risk result. For the relevant embodiments, reference may be made to the previous description, which will not be described in detail here.

In step 408, the port shift risk is detected to obtain the second result (which may also be referred to as a port shift enterprise list).

Specifically, common commodities of the enterprise (for example, imported common commodities and exported common commodities) in the first customs declaration data may be screened out first, and whether the customs clearance port of the common commodities of the enterprise within the recent time window (i.e., the first time window) are the customs clearance ports within the earlier time window (i.e., the second time window) is judged, to obtain the port shift enterprise list. For the relevant embodiments, reference may be made to the previous description, which will not be described in detail here.

It may be understood that, Fig. 4 schematically shows that the first time window is within the recent 30 days, and the second time window is from the recent 2 years ago to the recent 30 days ago, but the embodiment of the present disclosure is not limited thereto.

In step 410, whether there is an anomaly in the first customs declaration data may be determined based on the first result and the second result.

For example, a comprehensive risk value representing whether there is an anomaly in the first customs declaration data may be determined according to the first result and the second result, and the first result, the second result and the determined comprehensive risk value may be output. User (for example, staff of the customs) may evaluate the risk of customs declaration according to the first result, the second result and the comprehensive risk value which are output. Higher comprehensive risk value represents higher risk and more serious anomaly of the customs declaration.

The following is an example of the first result, the second result and the comprehensive risk value which are output:

```
   {
   "Comprehensive risk value": 2,
   "Risk information": {
   "Relationship between consignee entity and business entity":
 {"(enterprise A, enterprise B)": 0},
      "Relationship between consignee entity and customs
 declaration entity": {"(enterprise A, enterprise C)": 0},
      "Relationship between business entity and customs declaration
 entity": {"(enterprise B, enterprise C)": 0},
      "Relationship between consignee entity and import port":
 {"(enterprise A, port 1)": 0},
      "Relationship between business entity and import port":
 {"(enterprise B, port 1)": 0},
      "Relationship between customs declaration entity and import
 port": {"(enterprise C, port 1)": 0},
      "Relationship between consignee entity and domestic
 destination": {"(enterprise A, region 1)": 0},
      "Relationship between business entity and domestic
 destination": {"(enterprise B, region 1)": 0},
      "Relationship between customs declaration entity and domestic
 destination": {"(enterprise C, region 1)": 0},
      "Relationship between import port and domestic destination":
 {"(port 1, region 1)": 1},
      "Relationship between customs declaration entity and
 declaration port": {"(enterprise B, port 2)": 1},
     "Port shift enterprise list": {"import shift risk enterprises":
 {}, "export shift risk enterprises": {}}
   }
   }
```

In the above example, the risk value of 1 represents that there is a risk in the item set, the risk value of 0 represents that there is no risk in the item set, and the port shift enterprise list is null, which represents that there is no risk in the item corresponding to the entity field in the first customs declaration data. If the port shift enterprise list is not null, the risk value corresponding to the port shift enterprise list is the number of enterprises comprised in the list.

It may be understood that, the risk value corresponding to the port shift enterprise list may be any integer in [0, 3]. It may also be understood that, the consignee entity in the above examples may be the shipper entity in certain circumstances, and the import port may be the export port in certain circumstances.

In some embodiments, the comprehensive risk value may be obtained by summing all risk values. In this case, the comprehensive risk value may be any integer in [0, 14].

In other embodiments, the comprehensive risk value may be obtained by performing weighted summation on all risk values.

In some embodiments, in a case where the comprehensive risk value is equal to 0, it may be determined that there is no anomaly in the first customs declaration data. In other embodiments, in a case where the comprehensive risk value is not equal to 0, it may be determined that there is an anomaly in the first customs declaration data.

In a case where it is determined that there is an anomaly in the first customs declaration data, the type of the anomaly may also be further determined. Referring to the following Table 1, if the risk value of any object of serial numbers 1 to 3 is 1, it is determined that there is an anomaly related to the trade regional risk in the first customs declaration data; if the risk value of any object of serial numbers 4 to 11 is 1, it is determined that there is an anomaly related to the regional dispersion risk in the first customs declaration data; if the risk value of any object of serial numbers 12 to 14 is 1 (that is, the risk value corresponding to the port shift enterprise list is not 0), it is determined that there is an anomaly related to the port shift risk in the first customs declaration data.

**Table 1**

| Serial number | Object | Risk value |
|---|---|---|
| 1 | Relationship between consignee (shipper) entity and business entity | Trade regional risk |
| 2 | Relationship between consignee (shipper) entity and customs declaration entity | |
| 3 | Relationship between business entity and customs declaration entity | |
| 4 | Relationship between consignee (shipper) entity and domestic destination | Regional dispersion risk |
| 5 | Relationship between consignee (shipper) entity and import (export) port | |
| 6 | Relationship between business entity and domestic destination | |
| 7 | Relationship between business entity and import (export) port | |
| 8 | Relationship between customs declaration entity and domestic destination | |
| 9 | Relationship between customs declaration entity and import | |
| | (export) port | |
| 10 | Relationship between customs declaration entity and declaration port | |
| 11 | Relationship between import (export) port and domestic destination | |
| 12 | Consignee (shipper) entity | Port shift risk |
| 13 | Business entity | |
| 14 | Customs declaration entity | |

Based on the anomaly detection method shown in Fig. 4, the abnormal customs clearance trade activity related to the trade regional risk, the regional dispersion risk and the port shift risk can be detected accurately at the same time, so that potential anomaly in the customs declaration data can be identified more comprehensively, to help the user to evaluate the customs declaration risk more accurately.

The embodiments of the present disclosure further provide an anomaly detection apparatus.

In some embodiments, the anomaly detection apparatus comprises a module configured to perform the anomaly detection method according to any of the above embodiments.

In other embodiments, the anomaly detection apparatus comprises a memory and a processor coupled to the memory, wherein the processor is configured to perform the anomaly detection method according to any one of the above embodiments based on instructions stored in the memory.

Fig. 5 is a schematic structural view of an anomaly detection apparatus according to some embodiments of the present disclosure.

As shown in Fig. 5, the anomaly detection apparatus 500 comprises an obtaining module 501, a calculating module 502, a mining module 503, a processing module 504 and a determining module 505.

The obtaining module 501 is configured to obtain first customs declaration data to be detected. Here, the first customs declaration data comprises a plurality of fields in which corresponding items are associated with addresses. A plurality of items corresponding to the plurality of fields may form a plurality of item sets, and each item set comprises two items of the plurality of items.

The calculating module 502 is configured to calculate an evaluation distance between two addresses associated with the two items in each item set.

The mining module 503 is configured to perform association rule mining on a plurality of second customs declaration data which is historical to obtain an evaluation index representing an association relationship between the two items in each item set. In some embodiments, the evaluation index comprises at least one of frequency or confidence.

The processing module 504 is configured to process the evaluation distance and the evaluation index by using an anomaly detection algorithm to obtain a first result representing whether there is a risk between the two items in each item set. In some embodiments, the anomaly detection algorithm comprises an isolation forest algorithm, a One Class SVM algorithm and a statistical anomaly threshold algorithm.

The determining module 505 is configured to determine whether there is an anomaly in the first customs declaration data based on the first result.

In some embodiments, the plurality of item sets comprises a first item set, two fields corresponding to the two items in the first item set each being an entity field related to an entity. In this case, determining whether there is an anomaly in the first customs declaration data based on the first result by the determining module 505 comprises: determining that there is an anomaly related to a trade regional risk in the first customs declaration data in a case where the first result represents that there is a risk between the two items in the first item set.

In some embodiments, the plurality of item sets comprises a second item set, two fields corresponding to the two items in the second item set being one and another of an entity field related to an entity, a port field related to a port and a destination field related to a destination respectively. In this case, determining whether there is an anomaly in the first customs declaration data based on the first result by the determining module 505 comprises: determining that there is an anomaly related to a regional dispersion risk in the first customs declaration data in a case where the first result represents that there is a risk between the two items in the second item set.

In some embodiments, calculating an evaluation distance between two addresses associated with two items in each item set by the calculating module 502 comprises: parsing the two addresses associated with the two items in each item set to obtain two parsed addresses; obtaining geographic coordinates of the two parsed addresses; and calculating a geographic distance between the two parsed addresses based on the geographic coordinates. In this case, the evaluation distance comprises the geographic distance.

In some embodiments, the plurality of item sets comprises a third item set, two fields corresponding to the two items in the third item set not comprising a port field related to a port. In this case, calculating an evaluation distance between two addresses associated with two items in each item set by the calculating module 502 further comprises: calculating a first text distance between two strings corresponding to the two addresses associated with the two items in the third item set; and obtaining a final text distance based on the first text distance. Here, the evaluation distance of the third item set further comprises the final text distance.

In some embodiments, the two parsed addresses obtained by the calculating module 502 each comprise a plurality of levels. In this case, obtaining a final text distance based on the first text distance by the calculating module 502 comprises: taking the first text distance as the final text distance, in a case where strings corresponding to the plurality of levels each contain null; and calculating a second text distance between strings corresponding to each level in at least one level of the plurality of levels, in a case where the strings corresponding to the at least one level do not contain null. Here, the calculating module 502 obtains the final text distance based on the first text distance and the second text distance.

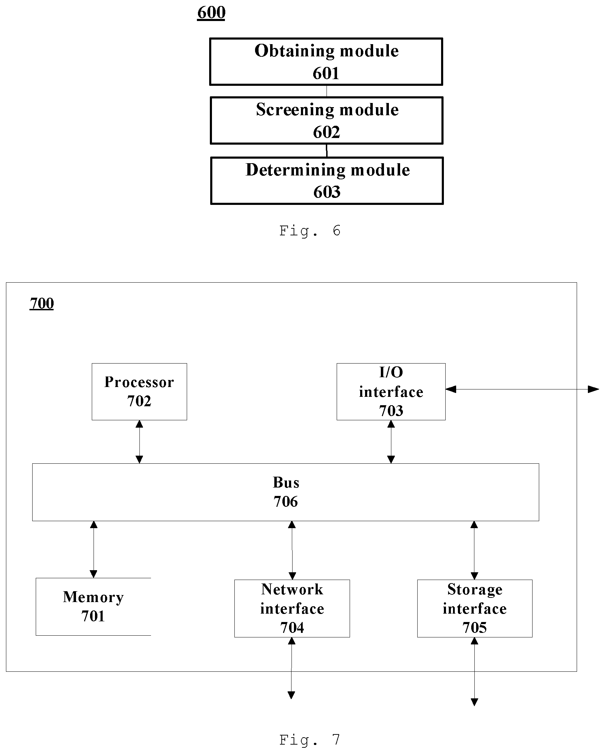

Fig. 6 is a schematic structural view of an anomaly detection apparatus according to other embodiments of the present disclosure.

As shown in Fig. 6, the anomaly detection apparatus 600 comprises an obtaining module 601, a screening module 602 and a determining module 603.

The obtaining module 601 is configured to obtain first customs declaration data to be detected.

The screening module 602 is configured to screen out a first group of second customs declaration data with an item corresponding to the entity field from the plurality of second customs declaration data.

The determining module 603 is configured to determine a commodity code with a frequency of occurrence that is greater than a threshold in the first group of second customs declaration data.

The screening module 602 is further configured to screen out a second group of second customs declaration data with the commodity code from the first group of second customs declaration data.

The determining module 603 is further configured to determine a second result representing whether there is a risk in the item corresponding to the entity field, according to whether an item corresponding to a port field related to a port in second customs declaration data within a first time window in the second group of second customs declaration data is comprised in second customs declaration data within a second time window in the second group of second customs declaration data. Here, a start time of the first time window is not earlier than an end time of the second time window.

The determining module 603 is further configured to determine whether there is an anomaly in the first customs declaration data based on the second result.

In some embodiments, in a case where the second result represents that there is a risk in the item corresponding to the entity field, the determining module 603 determines that there is an anomaly related to a port shift risk in the first customs declaration data.

It may be understood that, the anomaly detection apparatus 500/600 may each comprise other module(s) not shown to perform the anomaly detection method according to any of the above embodiments.

Fig. 7 is a schematic structural view of an anomaly detection apparatus according to still other embodiments of the present disclosure.

As shown in Fig. 7, the anomaly detection apparatus 700 may comprise a memory 701 and a processor 702 coupled to the memory 701. The processor 702 may be configured to perform the anomaly detection method according to any of the foregoing embodiments based on instructions stored in the memory 701.

The memory 701 may comprise, for example, a system memory, a fixed nonvolatile storage medium, and the like. The system memory may store, for example, an operation system, an application program, a Boot Loader and other programs.

The anomaly detection apparatus 700 may further comprise an I/O interface 703, a network interface 704, a storage interface 705, and the like. These interfaces 703, 704, 705 therebetween, and the memory 701 and the processor 702 therebetween may be connected via a bus 706, for example. The I/O interface 703 provides a connection interface for input-output apparatus such as a display, a mouse, a keyboard or a touch screen. The network interface 704 provides a connection interface for various networked apparatus. The storage interface 705 provides a connection interface for external storage apparatus such as SD card and USB flash disk.

The embodiments of the present disclosure further provide a computer readable storage medium comprising computer program instructions that, when executed by a processor, implement the anomaly detection method according to any of the above embodiments.

The embodiments of the present disclosure further provide a computer program product comprising a computer program that, when executed by a processor, implements the anomaly detection method according to any of the above embodiments.

The embodiments of the present disclosure further provide a computer program that, when executed by a processor, implements the anomaly detection method according to any of the above embodiments.

Hereto, various embodiments of the present disclosure have been described in detail. Some details well known in the art are not described to avoid obscuring the concept of the present disclosure. According to the above description, those skilled in the art would fully understand how to implement the technical solutions disclosed here.

Various embodiments in the specification are described in a progressive manner, so that differences from other embodiments are mainly illustrated in each embodiment, and reference may be made to each other for the same or similar parts between various embodiments. As for the embodiments of an apparatus, since they substantially correspond to the embodiments of a method, the descriptions are relatively simple. For relevant parts, reference may be made to some descriptions of the embodiments of a method.

Those skilled in the art should understand that, the embodiments of the present disclosure may be provided as a method, an apparatus, or a computer program product. Therefore, embodiments of the present disclosure can take the form of an entirely hardware embodiment, an entirely software embodiment or an embodiment combining both hardware and software. Moreover, the present disclosure may take the form of a computer program product embodied on one or more computer-usable non-transitory storage media (comprising but not limited to disk storage, CD-ROM, optical memory, etc.) having computer-usable program code embodied therein.

The present disclosure is described with reference to flowcharts and/or block diagrams of methods, apparatus (systems) and computer program products according to embodiments of the present disclosure. It should be understood that, each process in the flowcharts and/or the functions specified in one or more blocks of the block diagrams may be implemented by computer program instructions. The computer program instructions may be provided to a processor of a general-purpose computer, a special purpose computer, an embedded processor, or other programmable data processing apparatus to generate a machine, making the instructions executed by a processor of a computer or other programmable data processing apparatusgenerate means implementing the functions specified in one or more flows of the flowcharts and/or one or more blocks of the block diagrams.

The computer program instructions may also be stored in a computer readable memory apparatus capable of directing a computer or other programmable data processing apparatus to operate in a specific manner such that the instructions stored in the computer readable memory apparatus produce an article of manufacture comprising an instruction means implementing the functions specified in one or more flows of the flowcharts and/or one or more blocks of the block diagrams.

These computer program instructions can also be loaded onto a computer or other programmable apparatus to perform a series of operation steps on the computer or other programmable apparatus to generate a computer-implemented process such that the instructions executed on the computer or other programmable apparatus provide steps implementing the functions specified in one or more flows of the flowcharts and/or one or more blocks of the block diagrams.

Although some specific embodiments of the present disclosure have been described in detail by way of examples, those skilled in the art should understand that the above examples are only for the purpose of illustration but not for limiting the scope of the present disclosure. It should be understood by those skilled in the art that modifications to the above embodiments and equivalent substitution of part of the technical features can be made without departing from the scope and spirit of the present disclosure. The scope of the present disclosure is defined by the appended claims.

## Claims

1. An anomaly detection method, comprising:
obtaining first customs declaration data to be detected, wherein the first customs declaration data comprises a plurality of fields in which corresponding items are associated with addresses, a plurality of items corresponding to the plurality of fields forming a plurality of item sets, each item set comprising two items of the plurality of items;
calculating an evaluation distance between two addresses associated with the two items in each item set;
performing association rule mining on a plurality of second customs declaration data which is historical to obtain an evaluation index representing an association relationship between the two items in each item set;
processing the evaluation distance and the evaluation index by using an anomaly detection algorithm to obtain a first result representing whether there is a risk between the two items in each item set; and
determining whether there is an anomaly in the first customs declaration data based on the first result.

2. The anomaly detection method according to claim 1, wherein the plurality of item sets comprises a first item set, two fields corresponding to the two items in the first item set each being an entity field related to an entity;
wherein the determining whether there is an anomaly in the first customs declaration data based on the first result comprises:
determining that there is an anomaly related to a trade regional risk in the first customs declaration data in a case where the first result represents that there is a risk between the two items in the first item set.

3. The anomaly detection method according to claim 1, wherein the plurality of item sets comprises a second item set, two fields corresponding to the two items in the second item set being one and another of an entity field related to an entity, a port field related to a port and a destination field related to a destination respectively;
wherein the determining whether there is an anomaly in the first customs declaration data based on the first result comprises:
determining that there is an anomaly related to a regional dispersion risk in the first customs declaration data in a case where the first result represents that there is a risk between the two items in the second item set.

4. The anomaly detection method according to any one of claims 1 to 3, wherein the calculating an evaluation distance between two addresses associated with the two items in each item set comprises:
parsing the two addresses associated with the two items in each item set to obtain two parsed addresses;
obtaining geographic coordinates of the two parsed addresses; and
calculating a geographic distance between the two parsed addresses based on the geographic coordinates, wherein the evaluation distance comprises the geographic distance.

5. The anomaly detection method according to claim 4, wherein the plurality of item sets comprises a third item set, two fields corresponding to the two items in the third item set not comprising a port field related to a port;
wherein the calculating an evaluation distance between two addresses associated with the two items in each item set further comprises:
calculating a first text distance between two strings corresponding to the two addresses associated with the two items in the third item set; and
obtaining a final text distance based on the first text distance, wherein the evaluation distance of the third item set further comprises the final text distance.

6. The anomaly detection method according to claim 5, wherein the two parsed addresses each comprise a plurality of levels;
the obtaining a final text distance based on the first text distance comprises:
taking the first text distance as the final text distance, in a case where strings corresponding to the plurality of levels each contain null; and
calculating a second text distance between strings corresponding to each level in at least one level of the plurality of levels, in a case where strings corresponding to the at least one level do not contain null;
wherein the final text distance is obtained based on the first text distance and the second text distance.

7. The anomaly detection method according to any one of claims 1 to 6, wherein the evaluation index comprises at least one of frequency or confidence.

8. The anomaly detection method according to any one of claims 1 to 6, wherein the anomaly detection algorithm comprises an isolation forest algorithm, a one-class support vector machine algorithm and a statistical anomaly threshold algorithm.

9. The anomaly detection method according to any one of claims 1 to 6, wherein the plurality of fields comprises an entity field related to an entity;
the method further comprises:
screening out a first group of second customs declaration data with an item corresponding to the entity field from the plurality of second customs declaration data;
determining a commodity code with a frequency of occurrence that is greater than a threshold in the first group of second customs declaration data;
screening out a second group of second customs declaration data with the commodity code from the first group of second customs declaration data; and
determining a second result representing whether there is a risk in the item corresponding to the entity field, according to whether an item corresponding to a port field related to a port in second customs declaration data within a first time window in the second group of second customs declaration data is comprised in second customs declaration data within a second time window in the second group of second customs declaration data, wherein a start time of the first time window is not earlier than an end time of the second time window;
wherein whether there is an anomaly in the first customs declaration data is determined further based on the second result.

10. The anomaly detection method according to claim 9, wherein in a case where the second result represents that there is a risk in the item corresponding to the entity field, it is determined that there is an anomaly related to a port shift risk in the first customs declaration data.

11. An anomaly detection apparatus, comprising:
a module configured to perform the anomaly detection method according to any one of claims 1 to 10.

12. An anomaly detection apparatus, comprising:
a memory; and
a processor coupled to the memory and configured to perform the anomaly detection method according to any one of claims 1 to 10 based on instructions stored in the memory.

13. A computer readable storage medium, comprising computer program instructions, wherein the computer program instructions, when executed by a processor, implement the anomaly detection method according to any one of claims 1 to 10.

14. A computer program product, comprising a computer program, wherein the computer program, when executed by a processor, implements the anomaly detection method according to any one of claims 1 to 10.

15. A computer program, wherein the computer program, when executed by a processor, implements the anomaly detection method according to any one of claims 1 to 10.
